# EUROPEAN PATENT APPLICATION

(11) **EP 4 815 475 A1**
(43) Date of publication of application: **30.09.2026**
(21) Application number: 25305435.7
(22) Date of filing: 26.03.2025
(51) Int. Cl.: H04N 21/81

(54) **UV BASED TEXTURE ANIMATION IN MPEG AVATAR REPRESENTATION FORMAT**

(71) Applicant: InterDigital CE Patent Holdings, SAS, 75017 Paris (FR)
(72) Inventor: GOSSELIN, Philippe Henri, 35340 Liffre (FR); COVA REGATEIRO, João Pedro, 35220 Chateaubourg (FR); AVRIL, Quentin, 35830 Betton (FR); LE CLERC, Francois, 35590 L'Hermitage (FR)
(74) Representative: Vossius & Partner Patentanwälte Rechtsanwälte mbB

(57) **Abstract**

Some embodiments of a method may include: obtaining avatar animation information, wherein the avatar animation information comprises a UV animation stream format, animation data, and a reference to a UV set; determining whether the UV animation stream format is supported; determining whether the referenced UV set supports the UV animation stream format; and animating an avatar using the animation data and the referenced UV set

## Description

### INCORPORATION BY REFERENCE

The present application incorporates by reference in their entirety the following applications: European Patent Application Serial No. EP25305036, entitled "CONTROLLERS SIGNALING IN MPEG AVATAR REPRESENTATION FORMAT" and filed January 14, 2025 ("'036 application").

### BACKGROUND

The present application is related to avatars.

### SUMMARY

An example method in accordance with some embodiments may include: obtaining avatar animation information, wherein the avatar animation information includes a UV animation stream format, animation data, and a reference to a UV set; determining whether the UV animation stream format is supported; determining whether the referenced UV set supports the UV animation stream format; and animating an avatar using the animation data and the referenced UV set.

For some embodiments of the example method, the UV animation stream format includes a Universal Resource Name (URN).

For some embodiments of the example method, determining whether the UV animation stream format is supported includes determining whether the URN is in a list of formats supported by an avatar.

Some embodiments of the example method may further include obtaining the list of formats supported by the avatar.

For some embodiments of the example method, determining whether the UV animation stream format is supported includes parsing a supported animation data object.

For some embodiments of the example method, parsing the supported animation data object includes parsing one or more data structures associated with the avatar.

For some embodiments of the example method, determining whether the referenced UV set supports the UV animation stream format includes: obtaining a current level of detail (LOD); obtaining a list of formats supported by the referenced UV set for the current LOD; and determining whether the URN is in the list of formats supported by the referenced UV set for the current LOD.

For some embodiments of the example method, the avatar animation information includes a list of UV sets describing a UV-based animation.

For some embodiments of the example method, animating the avatar using the animation data and the referenced UV set includes: obtaining a list of UV coordinates corresponding to the referenced UV set; and animating the avatar further using the list of UV coordinates.

Some embodiments of the example method may further include obtaining a current level of detail (LOD), wherein obtaining the list of UV coordinates includes obtaining a list of UV coordinates corresponding to the referenced UV set and the current LOD.

For some embodiments of the example method, the avatar animation information includes a path to a location of a set of UV coordinates associated with the animation data.

For some embodiments of the example method, the avatar animation information includes a data root component with a set of UV coordinates associated with the animation data.

For some embodiments of the example method, animating an avatar using the animation data and the referenced UV set includes performing an affine transform on the set of UV coordinates.

For some embodiments of the example method, the avatar animation information satisfies a MPEG Avatar Representation Format (ARF)-based data format.

An example apparatus in accordance with some embodiments may include: a processor; and a memory storing instructions operative, when executed by the processor, to cause the apparatus to perform any one of the methods listed above.

### BRIEF DESCRIPTION OF THE DRAWINGS

The following detailed description will be better understood when read in conjunction with the appended drawings, in which there are shown examples of one or more of the multiple embodiments of the present application. It should be understood, however, that the embodiments described herein are not limited to the precise arrangements and instrumentalities shown in the drawings. In the drawings:
FIG. 1 is a system diagram illustrating an example set of interfaces for a system according to some embodiments.
FIG. 2 is a schematic illustration showing an example set of MPEG ARF main properties according to some embodiments.
FIG. 3 is a flowchart illustrating an example process for animating an avatar texture according to some embodiments.
FIG. 4 is a flowchart illustrating an example process for parsing of the "supportedAnimation" property of the "preamble" root property according to some embodiments.
FIG. 5 is a flowchart illustrating an example process for parsing an LOD object with the "uvSets" property according to some embodiments.
FIG. 6 is a flowchart illustrating an example process for parsing a UVSet object according to some embodiments.
FIG. 7 is a flowchart illustrating an example process for parsing a UV object according to some embodiments.
FIG. 8 is a flowchart illustrating an example process for animating an avatar according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "In at least one embodiment, ...." For brevity and clarity of presentation, this implied leading clause is not repeated *ad nauseum* in the detailed description.

### DETAILED DESCRIPTION

In describing the various embodiments of the present application, certain terminology is used herein for convenience only and should not be considered as limiting such embodiments. In the drawings, the same reference numerals are employed for designating the same elements throughout the several figures and the present description.

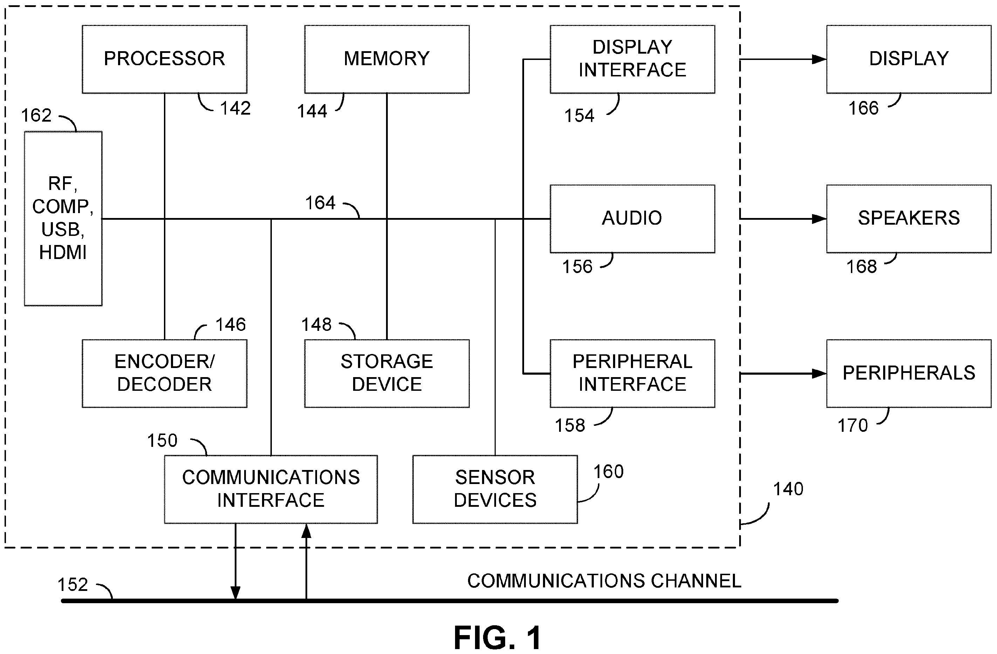

FIG. 1 is a system diagram illustrating an example set of interfaces for a system according to some embodiments. An extended reality display device, together with its control electronics, may be implemented using a system such as the system of FIG. 1. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

A User Equipment (UE) may correspond to any eXtended Reality (XR) device/node which may come in variety of form factors. Typical UE (e.g., XR UE) may include, but not limited to the following: Head Mounted Displays (HMD), optical see-through glasses and video see-through HMDs for Augmented Reality (AR) and Mixed Reality (MR), mobile devices with positional tracking and camera, wearables etc. In addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

This application relates to the encoding of UV based animations in the MPEG Avatar Representation Format (ARF). Animations based on UV coordinates update textures thanks to linear transforms on the UV coordinates.

UV based animation may allow spectacular effects in rendering with few transformations. For instance, to animation a fluid (like water or lava) a good UV setup and a shift allow one coordinate (U or V) may lead to very good if not photo realistic renderings.

Almost all scene description formats may store UV coordinates, and in most cases, they may be animated using blend shapes. For example, with gITF, the UV coordinates of a mesh primitive may be encoded in the "attributes" property with keys "TEXCOORD_x" with x an integer, and blendshapes in the "targets" property with the same keys. UV coordinates may also be directly transformed with transforms like rotations or translations. For example, with gITF, the "KHR_texture_transform" may be used to transform the UV coordinates of a mesh primitive.

Considering Avatar representation formats, VRM allows the animation of UV coordinates, according to *VRM-Specification,* G_{ITHUB}, *available at*: github<dot>com/vrm-c/vrm-specification/blob/master/specification/VRMC_materials_mtoon-1<dot>0/README<dot>md#uv-animation. Furthermore, a VRM application cannot freely transform the UV coordinates. The VRM application may only start a predefined animation, eventually let the animation repeat, and then stop the animation.

Using these methods, the signaling of UV based animations requires an embedding of the UV coordinates and transforms inside the file (e.g., the scene description file like gITF of VRM). As understood, there is no way to signal the UV coordinates that are encoded in another file nor to signal how to find the UV coordinates encoded in another file.

### Animation Streaming Format

A specificity of MPEG ARF is the signaling of expected streaming animation formats. Such a signal informs the decoder that the avatar may be animated following a specific list of animation controls. As understood, considering animations using UV transforms, there is no existing streaming animation format. This application introduces a way to signal to an avatar using UV based animation streaming format, and how to animate the avatar using this streaming format.

To render a texture on a mesh, two main components are required: a texture image and UV coordinates for the mesh and the texture image. These components may be encoded in a scene description format, like gITF. An application with a reference to this mesh may render the mesh with the texture.

An affine transform may be applied to the UV coordinates according to Eq. 1: $U ′ = handle _ borders \left(TU\right)$ in which: (1) U is the UV coordinates, represented as a 3xn matrix with n the number of UV coordinates, and *Uᵢ =* (*uᵢ, vᵢ,* 1); (2) T is a 3x3 affine transform matrix; and (3) handle_borders() is a function that ensures that the UV coordinates are in a valid range, like [0, 1] 4) U' is the matrix of the transformed UV coordinates.

If an application, in its rendering engine, replaces the original UV coordinates in matrix U with the transformed ones in matrix U', the rendering is updated, and the UV based animation runs as expected.

The main problem addressed by this application is the signaling of: the information required to locate the UV coordinates, how to transform the UV coordinates using an incoming UV transform, and how to update the correct UV coordinates in the rendering.

### MPEG ARF

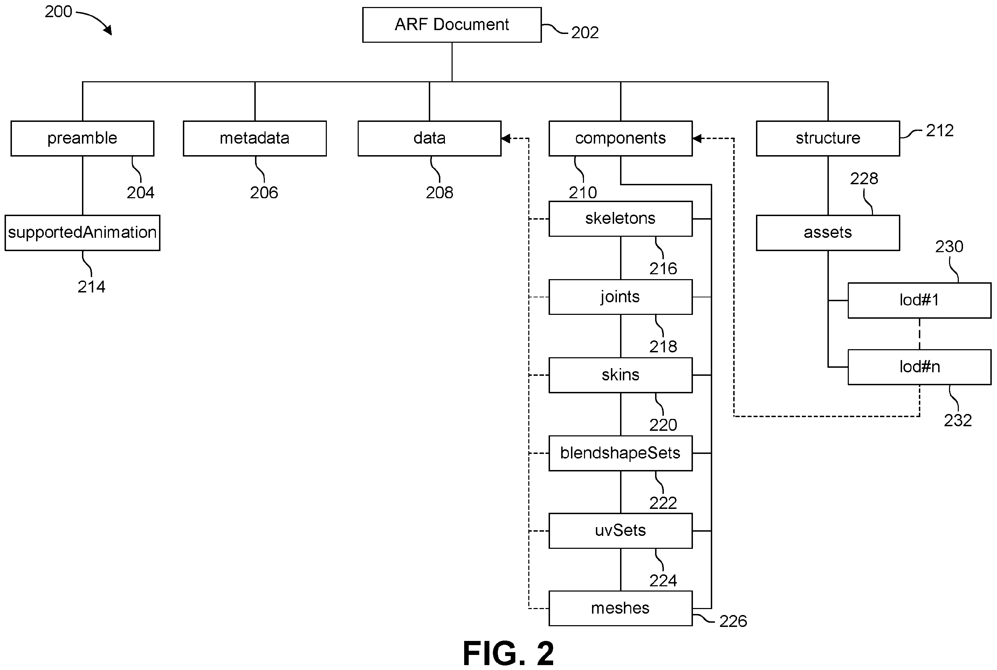

FIG. 2 is a schematic illustration showing an example set of MPEG ARF properties according to some embodiments. MPEG ARF is based on a set of containers regrouped into categories, according to Information Technology - Coded Representation of Immersive Media - Part 39: Avatar Representation Format, ISO/IEC, ISO/IEC 23090-39:2025 (2025) ("ISO/IEC 23090-39:2025")*.* MPEG ARF is based on a set of containers regrouped into categories as illustrated in the ARF data model of FIG. 2. The example structure 200 has an ARF document 202 and several categories of containers hanging off the ARF document.

The "preamble" container 204 is used to uniquely identify the format and characteristics of the file. In particular, the "preamble" container 204 contains a "supportedAnimation" property 214 which lists the streaming animation formats that the file supports.

The "metadata" container 206 contains main information, such as age or gender, of the avatar.

The "data" container 208 contains low-level data, like arrays of values, tensors, or references to external files specifying, e.g., the geometry and texture of the avatar. Items of the "data" container 208 are referenced by component items.

The "components" container 210 contains several component containers (skeletons 216, joints 218, skins 220, blendshapes 222, uvSets 224, and meshes 226), which are dedicated to a type of component. The "uvSets" component 224 is introduced to signal the properties of UV coordinates of the avatar. The "uvSets" component 224 contains a list for object UVSet, which is defined below.

The "structure" container 212 contains the "assets" component 228, which defines the modeling assets for avatar parts (body, hand, head, ...) and which may be at several levels of detail (LOD) 230, 232.

### SupportedAnimation

The supported animation identifies the type of animation supported by the avatar format. Table 1 lists the properties of a SupportedAnimation object.

**Table 1.**

| **Name** | **Type** | **Use** | **Description** |
|---|---|---|---|
| name | string | M | The name of the LOD. |
| faceAnimations | array(uri) | M | Lists the supported face animation types. Each item in the array is a string representing a supported face animation type. |
| | | | Each identifier should be formatted as a URN that includes an identifier of the framework, followed by an identifier of the facial blendshape set. |
| bodyAnimations | array(uri) | M | Lists the supported body animation types. Each item in the array is a string representing a supported body animation type. |
| | | | Each identifier should be formatted as a URN that includes an identifier of the body animation/tracking framework, followed by an identifier of the body joint set. |
| handAnimations | array(uri) | M | Lists the supported hand animation types. Each item in the array is a string representing a supported hand animation type. |
| | | | Each identifier should be formatted as a URN that includes an identifier of the hand animation/tracking framework, followed by an identifier of the hand joint set. |
| landmarkAnimations | array(uri) | O | Lists the supported landmark animation types. Each item in the array is a string representing a supported landmark animation type. |
| | | | Each identifier should be formatted as a URN that includes an identifier of the landmark animation/tracking framework, followed by an identifier of the landmark set. |
| proprietaryAnimations | array( Proprietary Animation) | O | A list of proprietary animation descriptions, which may be used to animate assets in the ARF container. |
| uvAnimations | array(uri) | M | Lists the supported UV animation types. Each item in the array is a string representing a supported UV animation type. |

The "uvAnimations" property, introduced in this application, lists the UV animation formats supported by the avatar in the ARF.

### LOD with UV Sets

The Level of Detail object provides a link to all components of an asset at a specific level of detail. Table 2 lists the properties of an LOD object.

**Table 2.**

| **Name** | **Type** | **Use** | **Description** |
|---|---|---|---|
| name | string | M | The name of the LOD. |
| skins | array(number) | O | List of references to all skins that are part of this asset. |
| meshes | array(number) | M | List of non-skinned meshes that are part of this asset. |
| skeletons | array(number) | O | List of references to skeletons in the ARF container. |
| blendshapeSets | array(number) | O | List of references to blendshape sets in the ARF container. |
| uvSets | array(number) | O | List of references to UV sets in the ARF container. |

The "uvSets" property is introduced to allow the referencing of all UV sets used by the LOD.

In some embodiments, the "uvSets" property does not reference UV sets in the "components" root property but may contain directly the properties of UV sets. For example, the data type of a "uvSets" property in an LOD object may be "array(UVSet)". In these embodiments, there is no "uvSets" property in the "components" root property.

### Components with UV Sets

The "components" component is the core of the ARF document. The "components" component lists all components of the ARF container and provides information to access and use these components for the reconstruction and animation of the base avatar model.

**Table 3.**

| **Name** | **Type** | **Use** | **Description** |
|---|---|---|---|
| skeletons | array(Skeleton) | O | A list of skeletons used to describe the avatar skeletal asset. |
| skins | array(Skin) | O | A list of assets that are stored in this ARF container. |
| meshes | array(Mesh) | M | A list of geometries used to describe the avatar asset. |
| nodes | array(Node) | O | A list of nodes used to organize, merge and describe and transform the avatar components. |
| blendshapeSets | array(BlendshapeSet) | O | A list of blend shape sets used to describe the blend shape-based animations. |
| landmarkSets | array(LandmarkSet) | O | A list of landmark sets used to describe landmarkbased animation. |
| uvSets | array(UVSet) | O | A list of UV sets used to describe UV-based animation. |

The "uvSets" property is introduced to allow the definition of UV sets of the avatar.

### Signaling a UV Set

Table 4 lists the properties of a UVSet object.

**Table 4.**

| **Name** | **Type** | **Use** | **Description** |
|---|---|---|---|
| name | string | M | The name of the UV set. |
| id | integer | M | A unique identifier of the UV set. |
| animationInfo | array(AnimationLink) | M | Establishes a link to the supported animation and tracking frameworks that this UV set may be used with. |
| description | string | O | The description of the UV set. |
| purpose | string | O | The purpose of the UV set. |
| uvs | array(UV) | M | The list of UV coordinates. |

The UVSet property type does not exist in previous formats and is introduced with the present application. Such items are stored in the "uvSets" property of the "components" root property. They may be referenced by the "uvSets" property of an LOD object. The purpose of this property is to define which UV coordinates may be updated with transforms received by a UV animation stream to animate the avatar.

The "name" property defines the name of the avatar UV set.

The "id" property defines a unique integer for identifying the avatar UV set.

The "animationlnfo" property defines which animation streaming formats the UV set may be used. The *AnimationLink* property type is defined in section 7.5.6 of the ARF CD, *ISO*/*IEC 23090-39:2025.*

The "description" property describes the avatar UV set and its usage. The "description" property is only illustrative. For example, the avatar UV set may be used in a user interface to help the user understand for what the UV set was intended.

The "purpose" property contains a string that identifies the purpose of the avatar UV set. The "purpose" property must follow predetermined values, defined by an application or a standard. In some embodiments, the "purpose" property is an enum data type.

The "uvs" list contains the properties of each UV coordinate of the set.

### Signaling UV Coordinates

Table 5 lists the properties of a UV object.

**Table 5.**

| **Name** | **Type** | **Use** | **Description** |
|---|---|---|---|
| name | string | M | The name of the UV coordinates. |
| id | integer | M | A unique identifier of the UV coordinates. |
| description | string | O | The description of the UV coordinates. |
| purpose | string | O | The purpose of the UV coordinates. |
| borderHandling | string | M | Defines how borders are handled, for instance "mirror" or "clip". |
| UV | number | M | References an item in the data root component with UV coordinates. |
| uvPath | string | O | Indicates where the UV coordinates may be found in the item referenced by "uv". |

The UV property type does not exist in previous formats and is introduced with the present application.

The "name" property defines the name of the UV coordinates.

The "id" property defines a unique integer for identifying the UV coordinates.

The "description" property describes the avatar UV set and its usage. The "description" property is only illustrative. For example, the avatar UV set may be used in a user interface to help the user understand for what the UV set was intended.

The "purpose" property contains a string that identifies the purpose of the avatar UV set. The "purpose" property must follow predetermined values, defined by an application or a standard. In some embodiments, the "purpose" property is an enum data type.

The "borderHandling" property defines how to handle transformed UV coordinates outside the valid range (like [0, 1]). For instance, if "borderHandling" is "mirror", then the transformed UV coordinates must act as if the texture image was mirrored in every direction.

The "uv" element references a data item with UV coordinates. The UV coordinates may be directly defined, for instance using a "application/mpeg.arf.dense" data item. The UV coordinates also may be in an external file, for instance using a "model/gltf-binary" data item. In the latter case, the "uvPath" property may have to be defined to indicates which UV coordinates to consider in the external file.

### Signalled Data Usage

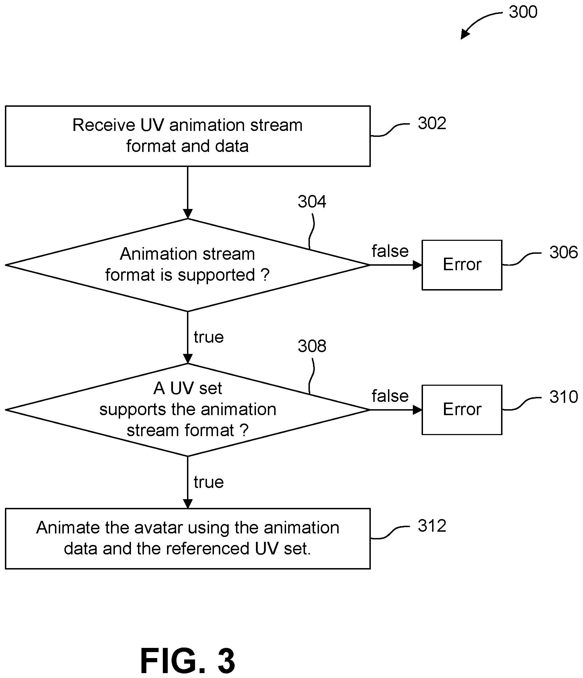

FIG. 3 is a flowchart illustrating an example process for animating an avatar texture according to some embodiments. FIG. 3 shows an example process 300 of how the signalled data may be used to animate the avatar texture using transform of UV coordinates.

The application receives 302 texture animation data (transforms) respecting a specific animation stream format.

A determination 304 is made of whether the animation format is supported. The avatar must support the animation stream format to continue. The "uvAnimation" list in the "supportedAnimation" property of the "preamble" root property must contain the Universal Resource Name (URN) of the received animation stream format. If the animation format is not supported, an error 306 is raised.

A determination 308 is made of whether the UV set supports the animation stream format. The avatar with the currently used LOD must have a UV set that supports the animation streaming format. The "animationFormat" property of an item of the "uvSets" list of the "components" root property must be equal to the URN of the received animation stream format, and the "uvSets" list of the currently used LOD must reference this UV set. If the UV set does not support the animation stream format, an error 310 is raised.

The application animates 312 the avatar transforming each UV coordinates defined in the "uvSets" list. Each item of "uvSets" locates (for loading) and identifies (for updating in the rendering engine) UV coordinates of the avatar to transform.

### Parsing of SupportedAnimation

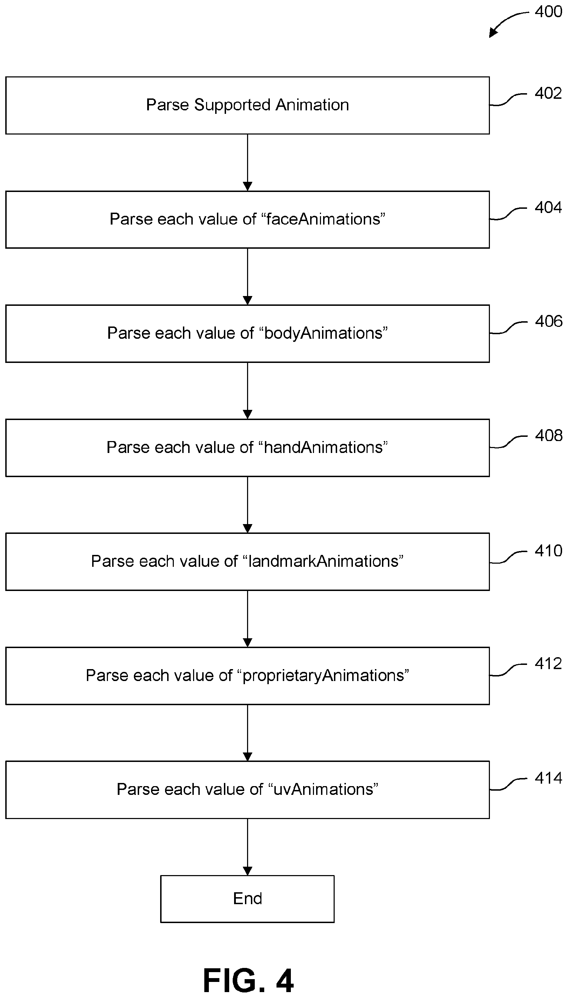

FIG. 4 is a flowchart illustrating an example process for parsing of the "supportedAnimation" property of the "preamble" root property according to some embodiments. FIG. 4 shows an example process 400 that happens every time the "supportedAnimation" property of the "preamble" root property in the ARF file is parsed 402 or processed.

Each value of the "faceAnimations" list is parsed 404. Each value of the "bodyAnimations" list is parsed 406. Each value of the "handAnimations" list is parsed 408. Each value of the "landmarkAnimations" list is parsed 410. Each value of the "proprietaryAnimations" list is parsed 412. Each value of the "uvAnimations" list is parsed 414. Parsing ends and the example process 400 exits.

### Parsing of LOD

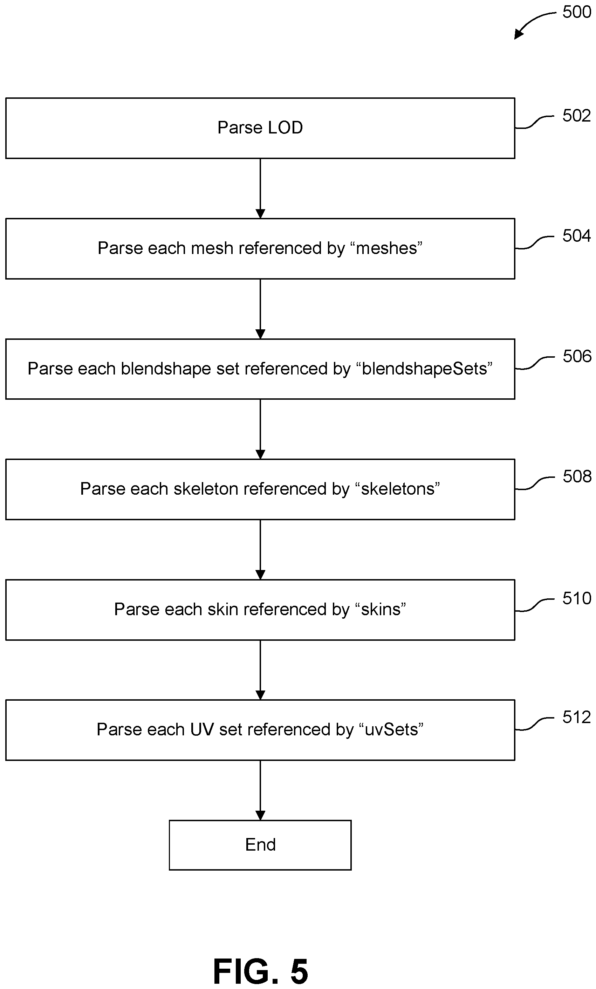

FIG. 5 is a flowchart illustrating an example process for parsing an LOD object with the "uvSets" property according to some embodiments. FIG. 5 shows an example process 500 that happens every time an LOD object in the ARF file is parsed 502 or processed.

Each mesh referenced the item of the "meshes" list is parsed 504. Each blendshape set referenced the item of the "blendshapeSets" list is parsed 506. Each skeleton referenced the item of the "skeletons" list is parsed 508. Each skin referenced the item of the "skins" list is parsed 510. Each UV set referenced the item of the "uvSets" list is parsed 512. Parsing ends and the example process 500 exits.

### Parsing of UVSet

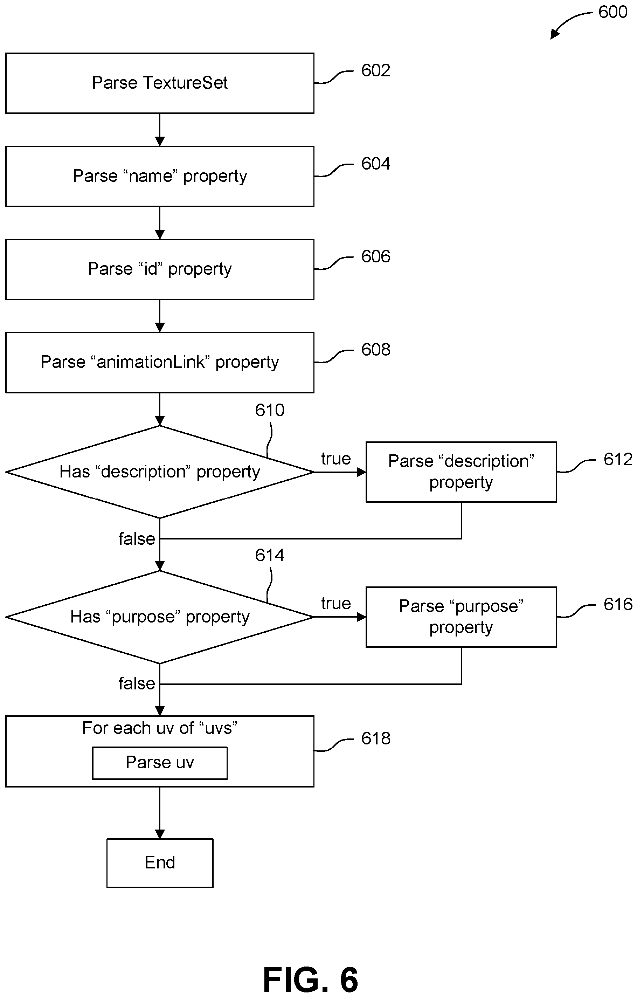

FIG. 6 is a flowchart illustrating an example process for parsing a UVSet object according to some embodiments. FIG. 6 shows an example process 600 that happens every time a UVSet object in the ARF file is parsed 602 or processed.

The "name" property is parsed 604. If this property is missing, an error is raised. The "id" property is parsed 606. If this property is missing, an error is raised. The "animationLink" property is parsed 608. If this property is missing, an error is raised. The referenced animation streaming format must exists in the "preamble" root property.

A determination 610 is made of whether the "description" property exists. If present, the "description" property is parsed 612. A determination 614 is made of whether the "purpose" property exists. If present, the "purpose" property is parsed 616. Each "uv" element of the "uvs" list is parsed 618. Parsing ends and the example process 600 exits.

### Parsing of UV

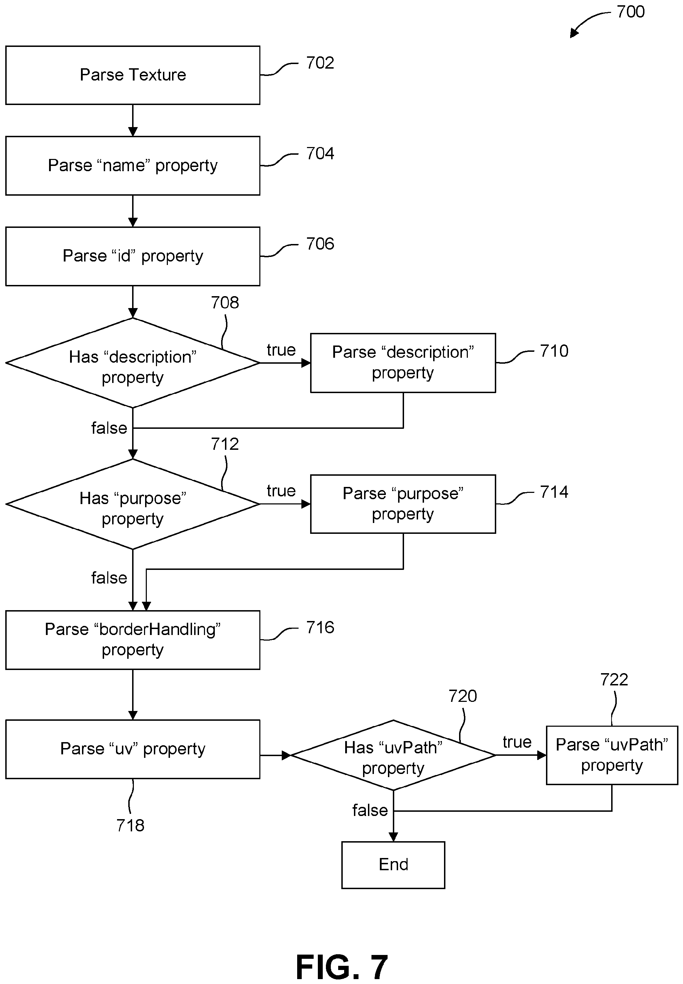

FIG. 7 is a flowchart illustrating an example process for parsing a UV object according to some embodiments. FIG. 7 shows an example process 700 that happens every time a UV object in the ARF file is parsed 702 or processed.

The "name" property is parsed 704. If this property is missing, an error is raised. The "id" property is parsed 706. If this property is missing, an error is raised.

A determination 708 is made of whether the "description" property exists. If present, the "description" property is parsed 710. A determination 712 is made of whether the "purpose" property exists. If present, the "purpose" property is parsed 714.

The "borderHandling" property is parsed 716. If this property is missing, an error is raised. The "uv" property is parsed 718. If this property is missing, an error is raised.

A determination 720 is made of whether the "uvPath" property exists. If present, the "uvPath" property is parsed 722. Parsing ends and the example process 700 exits.

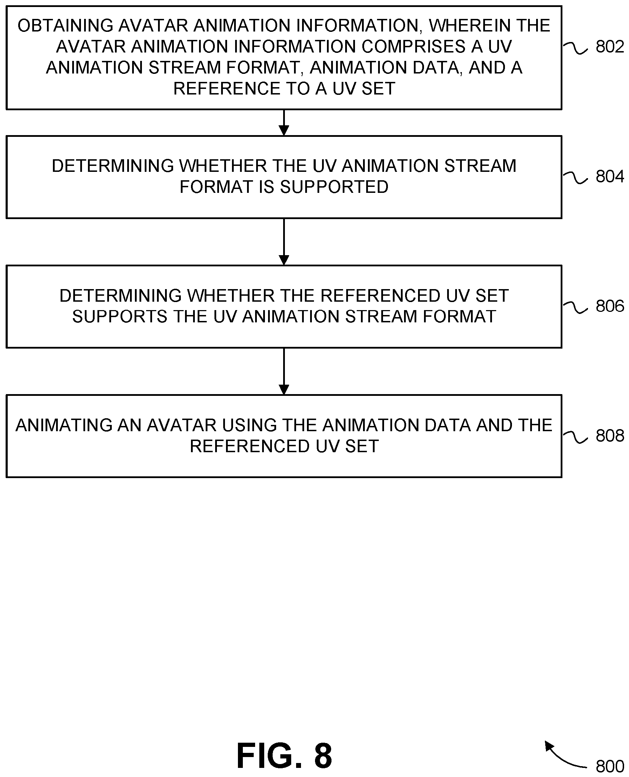

FIG. 8 is a flowchart illustrating an example process for animating an avatar according to some embodiments. For some embodiments, an example process 800 may include obtaining 802 avatar animation information, wherein the avatar animation information comprises a UV animation stream format, animation data, and a reference to a UV set. For some embodiments, the example process 800 may further include determining 804 whether the UV animation stream format is supported. For some embodiments, the example process 800 may further include determining 806 whether the referenced UV set supports the UV animation stream format. For some embodiments, the example process 800 may further include animating 808 an avatar using the animation data and the referenced UV set.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining avatar animation information, wherein the avatar animation information includes a UV animation stream format, animation data, and a reference to a UV set; determining whether the UV animation stream format is supported; determining whether the referenced UV set supports the UV animation stream format; and animating an avatar using the animation data and the referenced UV set.

For some embodiments of the example method, the UV animation stream format includes a Universal Resource Name (URN).

For some embodiments of the example method, determining whether the UV animation stream format is supported includes determining whether the URN is in a list of formats supported by an avatar.

Some embodiments of the example method may further include obtaining the list of formats supported by the avatar.

For some embodiments of the example method, determining whether the UV animation stream format is supported includes parsing a supported animation data object.

For some embodiments of the example method, parsing the supported animation data object includes parsing one or more data structures associated with the avatar.

For some embodiments of the example method, determining whether the referenced UV set supports the UV animation stream format includes: obtaining a current level of detail (LOD); obtaining a list of formats supported by the referenced UV set for the current LOD; and determining whether the URN is in the list of formats supported by the referenced UV set for the current LOD.

For some embodiments of the example method, the avatar animation information includes a list of UV sets describing a UV-based animation.

For some embodiments of the example method, animating the avatar using the animation data and the referenced UV set includes: obtaining a list of UV coordinates corresponding to the referenced UV set; and animating the avatar further using the list of UV coordinates.

Some embodiments of the example method may further include obtaining a current level of detail (LOD), wherein obtaining the list of UV coordinates includes obtaining a list of UV coordinates corresponding to the referenced UV set and the current LOD.

For some embodiments of the example method, the avatar animation information includes a path to a location of a set of UV coordinates associated with the animation data.

For some embodiments of the example method, the avatar animation information includes a data root component with a set of UV coordinates associated with the animation data.

For some embodiments of the example method, animating an avatar using the animation data and the referenced UV set includes performing an affine transform on the set of UV coordinates.

For some embodiments of the example method, the avatar animation information satisfies a MPEG Avatar Representation Format (ARF)-based data format.

An example apparatus in accordance with some embodiments may include: a processor; and a memory storing instructions operative, when executed by the processor, to cause the apparatus to perform any one of the methods listed above.

One or more embodiments provide a computer program including instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods include one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present application may refer to "determining" various pieces of information. Determining information may include one or more of, for example, estimating, calculating, predicting, or retrieving (e.g., from memory) the information.

The present application may refer to "accessing" various pieces of information. Accessing information may include one or more of, for example, receiving, retrieving (e.g., from memory), storing, moving, copying, calculating, determining, predicting, or estimating the information. Similarly, the present application may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present application or the following claims. Although features and elements are described herein in particular combinations, those of ordinary skill in the art will appreciate that such features or elements may be used alone or in any combination with the other features and elements. It is understood, therefore, that the overall teachings of the present application are not limited to the particular embodiments, implementations, and examples disclosed herein, but are intended to cover variations, modifications, and alternatives as defined by the appended claims and any and all equivalents thereof.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

Various numeric values may be used in the present application, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:
obtaining avatar animation information,
wherein the avatar animation information comprises a UV animation stream format, animation data, and a reference to a UV set;
determining whether the UV animation stream format is supported;
determining whether the referenced UV set supports the UV animation stream format; and
animating an avatar using the animation data and the referenced UV set.

2. **The** method of claim 1, wherein the UV animation stream format comprises a Universal Resource Name (URN).

3. **The** method of claim 2, wherein determining whether the UV animation stream format is supported comprises determining whether the URN is in a list of formats supported by an avatar.

4. **The** method of claim 3, further comprising obtaining the list of formats supported by the avatar.

5. **The** method of any one of claims 1-4, wherein determining whether the UV animation stream format is supported comprises parsing a supported animation data object.

6. **The** method of claim 5, wherein parsing the supported animation data object comprises parsing one or more data structures associated with the avatar.

7. **The** method of any one of claims 2-5, wherein determining whether the referenced UV set supports the UV animation stream format comprises:
obtaining a current level of detail (LOD);
obtaining a list of formats supported by the referenced UV set for the current LOD; and
determining whether the URN is in the list of formats supported by the referenced UV set for the current LOD.

8. **The** method of any one of claims 1-7, wherein the avatar animation information comprises a list of UV sets describing a UV-based animation.

9. **The** method of any one of claims 1-8, wherein animating the avatar using the animation data and the referenced UV set comprises:
obtaining a list of UV coordinates corresponding to the referenced UV set; and
animating the avatar further using the list of UV coordinates.

10. The method of claim 9, further comprising:
obtaining a current level of detail (LOD),
wherein obtaining the list of UV coordinates comprises obtaining a list of UV coordinates corresponding to the referenced UV set and the current LOD.

11. The method of any one of claims 1-10, wherein the avatar animation information comprises a path to a location of a set of UV coordinates associated with the animation data.

12. The method of any one of claims 1-10, wherein the avatar animation information comprises a data root component with a set of UV coordinates associated with the animation data.

13. The method of any one of claims 11-12, wherein animating an avatar using the animation data and the referenced UV set comprises performing an affine transform on the set of UV coordinates.

14. The method of any one of claims 1-13, wherein the avatar animation information satisfies a MPEG Avatar Representation Format (ARF)-based data format.

15. An apparatus comprising:
a processor; and
a memory storing instructions operative, when executed by the processor, to cause the apparatus to perform the method of any one of claims 1 through 14.
